# EUROPEAN PATENT APPLICATION

(11) **EP 3 202 558 A1**
(43) Date of publication of application: **09.08.2017**
(21) Application number: 16154253.5
(22) Date of filing: 04.02.2016
(51) Int. Cl.: B29C 67/00, B33Y 30/00, B33Y 50/02

(54) **APPARATUS FOR A FACILITY AND METHOD OF ADDITIVELY MANUFACTURING A COMPONENT**

(71) Applicant: Siemens Aktiengesellschaft, 80333 München (DE)
(72) Inventor: Geisen, Ole, 10781 Berlin (DE); Haberland, Christoph, 44789 Bochum (DE); Piegert, Sebastian, 03222 Lübbenau (DE); Rule, David, 10179 Berlin (DE)

(57) **Abstract**

The invention relates to an apparatus (10) for a facility (100) for additively manufacturing a component (7) comprising a base (1) forming a manufacturing surface (6), wherein the base (1) comprises a plurality of portions (5), and a plurality of temperature sensors (3) being arranged in or below the manufacturing surface (6), wherein at least one temperature sensor (3) is further arranged in each portion (5) and wherein the temperature sensors (3) are configured such that a temperature of each of the portions (5) can be measured individually by the temperature sensors (3).

## Description

The present invention relates to an apparatus for a facility for additively manufacturing a component and a corresponding facility. Furthermore, the present invention relates to a method of additively manufacturing a component.

The component may be a ceramic or metallic component or a plastic component. Particularly, the component may be a component of a turbine, such as a gas turbine.

The term "additive" in the context of manufacturing shall particularly denote a layer-wise, generative and/or bottom-up manufacturing process. The additive manufacturing as described herein may be or relate to rapid prototyping.

Powder bed manufacturing methods such as selective laser melting or selective laser sintering are relatively well known methods for fabricating, prototyping or manufacturing parts or components from powder material. Conventional apparatuses or setups for such methods usually comprise a base or manufacturing or building platform on which the part or component is built layer-by-layer after the feeding of a layer of powder which may then be melted, e.g. by the energy of a laser beam and subsequently solidified. The layer thickness is determined by a scraper that moves, e.g. automatically over the powder bed and removes excess powder. Typical layer thicknesses amount to 20 µm or 40 µm. During the manufacture, said laser beam scans over the surface and melts the powder on selected areas which may be predetermined by a CAD-file according to the geometry of the component to be manufactured. In case of metal components, the metal is often metallurgically bonded or fused to the base or platform, e.g. of the corresponding facility of additively manufacturing. Thereby, heat dissipation is a delicate aspect which is on one side difficult to control and, on the other side, crucial to the structure formation of the solid component. In general, fast cooling of the component e.g. after it has been melted and solidified may lead to a microstructure which is adverse as compared to casting processes for example. On the other hand, cooling may be required for the desired microstructure or surface roughness of the component, as e.g. heat from the laser beam can only be dissipated via the powder bed and/or possible support structures of or for the component. A metallic powder, however, has heat-isolating properties such that it may be very difficult to dissipate the heat away from the component.

Differences in the temperature or temperature gradients e.g. between the plate or base and the component generally lead to certain thermal stresses and, consequently, to distortions and/or structural defects in the plate and/or the component. Said distortions may then lead to distortions throughout the final component.

Up to now, manufacturers utilizing selective laser melting have to accept certain distortions in the components. Possibly, such distortions may be at least partly compensated for by complicated and expensive post machining. In particular cases, the manufacturer may use expensive high-strength fixtures or devices to reduce the distortions after the additive manufacture.

Means for controlling temperature in the additive manufacture are known from US 2015/0268099 A1 and WO 2015/108555 A1, for example.

It is therefore an object of the present invention to provide means to improve control and adjustment of temperature, preferably over a manufacturing surface during the additive manufacture and thereby to reduce the occurrence of distortions and/or defects in the as-manufactured component. Particularly, means are provided to control the temperature of a manufacturing base or platform and thereby the temperature of the component at a certain spatial resolution.

The mentioned object is achieved by the subject-matter of the independent claim. Advantageous embodiments are subject-matter of the dependent claims.

An aspect of the present invention relates to an apparatus for a facility for additively manufacturing a component comprising a base forming a manufacturing surface. The manufacturing surface preferably represents a surface onto which the component is to be manufactured. The base comprises a plurality of portions. In other words, the base may be subdivided in the different portions. The entirety of the portions preferably forms the base. The base may e.g. form a body of the apparatus.

In an embodiment, the portions are lateral portions of the base.

The apparatus further comprises a plurality of temperature sensors being arranged - in a normal operation of the apparatus - in or below the manufacturing surface, wherein at least one temperature sensor is preferably further arranged in each portion and wherein the temperature sensors are configured such that a temperature of each of the portions can be measured individually by the temperature sensors. In other words, each temperature sensor may be coordinated to a certain portion for the measurement of the temperature of that portion. The temperature of the portions may be measured separately or independently by the temperature sensors.

By the provision of the plurality of temperature sensors, it is particularly feasible to allow for the control of temperatures, such as a plane and/or spatial temperature distribution, during the additive manufacture of the component at a certain resolution. This is particularly advantageous as to prevent the formation of heat-induced distortions or defects in the component. Said distortions are particularly likely to occur only in regions or portions which are actually exposed or influenced by the heat of an energy beam, such as a laser beam which is provisioned to solidify a base material for the component. In addition, the junction between a base or manufacturing platform and the component which is to be manufactured thereto can be improved.

In an embodiment the apparatus further comprises a plurality of heating elements, wherein the heating elements are arranged and configured such that the portions of the base can be heated individually by the heating elements. Expediently, the heating elements are arranged below the manufacturing surface.

In an embodiment, the heating elements, preferably all of them are arranged or provided in the base. Preferably, the base or each portion thereof is adapted to be heated by the heating elements or may be held at a certain or predetermined temperature.

In an embodiment the apparatus comprises a control unit. By means of the control unit, it is possible to provide for a feedback control regulation or monitoring of the temperature or temperature gradients in each of the portions. To this effect, the control unit is, preferably electrically, connected to the heating elements and to the temperature sensors.

In an embodiment, the control unit is configured to control the temperature of, preferably of each of, the portions to a predetermined value, respectively. Thus, each of the portions of the base may, if desired, be controlled to a different predetermined value. To this effect, the control unit preferably drives or actuates the heating elements in such a way that the temperature of the portions is controlled accordingly.

In an embodiment, the apparatus is a plate or platform of a facility for additively manufacturing the component.

In an embodiment, at least some of the temperature sensors are arranged at and/or in the manufacturing surface or its plane for measuring a temperature of the base at the manufacturing surface. According to this embodiment, that portion for which the temperature is actually measured is a superficial portion of the manufacturing surface. Advantageously, the temperature of the base may directly be controlled and/or measured at the manufacturing surface and therewith close to initially built layers of the component. In particular, the junction or deposition of said layers on the base may then be carried out without or with little presence of defects and distortions.

In an embodiment, at least some of the temperature sensors are arranged below the manufacturing surface for measuring a temperature along a thickness of the base, i.e. in the bulk of the base. According to this embodiment, it may advantageously be achieved that temperature and or temperature courses or distributions may be monitored and/or supervised along the height or thickness of the base. This embodiment may particularly be implemented in addition to the previously described embodiment, wherein the temperature control may further be improved. Thus, a good structural connection - as described above - may further be facilitated.

In an embodiment the apparatus comprises a carrier which is arranged below or underneath the base, e.g. in order to carry or support the base. The term "below" may denote a situation, wherein the apparatus and/or the base are in a normal operation, e.g. during an additive manufacture of the component. When the base is viewed in plan view, for example, the carrier may be arranged behind the base.

In an embodiment the heating elements are arranged in the carrier.

In an embodiment, the carrier is a part separate from the base. This may allow for a greater versatility or applicability of the apparatus, the base and/or the facility for additively manufacturing.

In an embodiment the heating elements are arranged equally spaced with respect to each other, preferably spaced or distributed homogeneously or uniformly, e.g. in or over the base. This embodiment is particularly advantageous for a homogeneous or uniform and expedient temperature monitoring over or throughout the base.

In an embodiment, the temperature sensors are arranged equally spaced with respect to each other. This embodiment is particularly expedient in conjunction with the previous embodiment.

In an embodiment the heating elements are at least partly arranged inhomogeneously, e.g. such that a greater density of heating elements and/or temperature sensors is present in a central area of the base. This embodiment may be expedient as it may be necessary to control and/or supervise the temperature of the central region of the base and/or the component with a greater accuracy.

In an embodiment the temperature sensors are at least partly arranged inhomogeneously. This embodiment is particularly expedient in conjunction with the previous embodiment.

In an embodiment, the temperature sensors are or comprise, preferably each, thermocouples. As an advantage of this embodiment, the temperature of the portions may be measured, controlled or supervised reliably. Furthermore, the temperature sensors may be arranged in the base, more specifically close to the manufacturing surface.

In an embodiment, the temperature sensors are, preferably each, pyrometric temperature sensors. Along with this embodiment, the advantages of the pyrometric temperature sensing, e.g. its simplicity, may be exploited.

A further aspect of the present invention relates to a facility for additively manufacturing a component comprising the apparatus as described. The facility further comprises a scraper for depositing a powder as a base material for the component and a solidifying or scanning unit for selectively solidifying the powder with an energy beam in order to manufacture the component.

A further aspect of the present invention relates to a method for additively manufacturing a component, wherein the component is manufactured by a powder bed manufacturing process, such as selective laser melting. The method further comprises controlling the temperature of the portions to a predetermined value, respectively, wherein the temperature of each of the portions of the base is measured individually by the temperature sensors and the portions are heated individually by the heating elements.

A further aspect of the present invention relates to a component which is or can be manufactured by the method as described.

Embodiments, features and/or advantages of the apparatus may as well relate to the method and/or the component or vice versa.

The present invention is further described hereinafter with reference to illustrated embodiments shown in the accompanying drawings.

Like elements, elements of the same kind and identically acting elements may be provided with the same reference numerals in the Figures.
Figure 1 shows an apparatus of the prior art.
Figure 2 shows a schematic of a first embodiment of the apparatus according to the present invention.
Figure 3 shows a schematic of a facility for additively manufacturing according to the present invention.

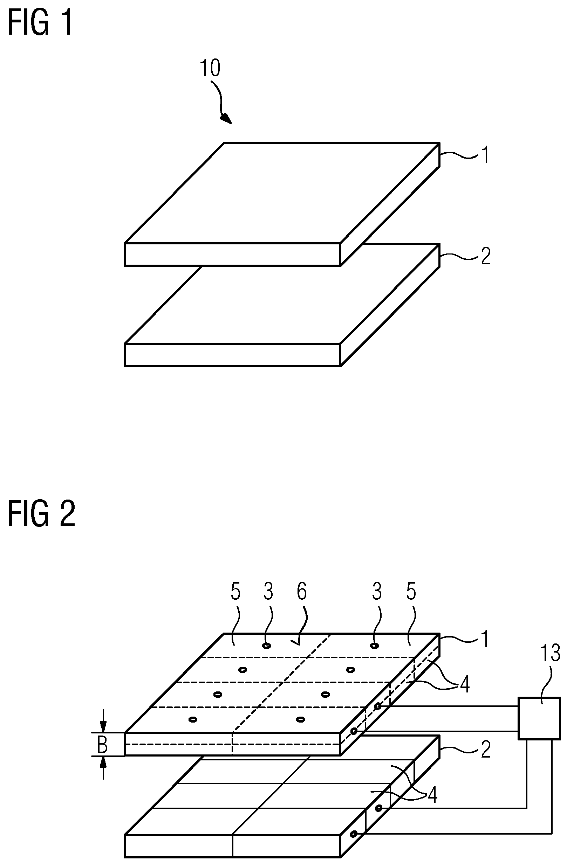

Figure 1 shows a conventional apparatus 10. The apparatus comprises a base, e.g. of or for a conventional facility for additively manufacturing of a component. Onto the base 1, said component may expediently be additively manufactured or built up.

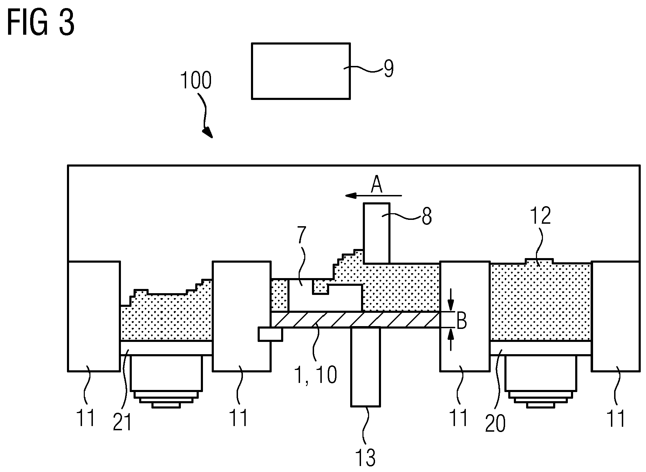

The apparatus 10 further comprises a carrier 2. In Figure 1, the apparatus 10 is shown in a disassembled state, wherein the base 1 of the apparatus 10 is indicated above the carrier 2. Preferably, the carrier 2 is or comprises a heater (not explicitly indicated) being arranged and configured to heat or warm the base 1, e.g. for an additive manufacture of the component (compare numeral 7 in Figure 3 for example). As a disadvantage, though the temperature of the base 1 may be adjusted, this may only be done in a very limited way and e.g. only to a single set value.

Figure 2 shows an apparatus 10 according to the present invention. The apparatus 10 comprises a base 1. The base 1 forms or provides a manufacturing surface 6.

The base 1 comprises a plurality of portions 5. Particularly, eight different portions 5 are shown distributed over or throughout the manufacturing surface 6. It can e.g. be observed in Figure 2 that the sum of the area of the portions 5 equals to the area of the manufacturing surface 6.

Preferably, the subdivision of the base 1 and/or the manufacturing surface 6 into portions 5 is only a theoretical partitioning. In reality, the base is preferably present as a monolithic piece.

The portions 5 may be lateral portions as shown in Figure 2. Additionally or alternatively, there may be one or a plurality of portions distributed along a thickness B of the base 1. Thus, the portions 5 are preferably distributed over the bulk of the base 1 as well as over the manufacturing surface 6.

The base 1 further comprises a plurality of temperature sensors 3. In each portion 5, there is preferably at least one temperature sensor 3 arranged. Although Figure 2 shows only one temperature sensor 3 per portion 5, there may be a plurality of temperature sensors 3 present in each of the portions 5 of the base 1.

When the apparatus is in a normal operation, the temperature sensors 3 are preferably arranged in or below the manufacturing surface 6. When referring to the superficial portions 5 at the manufacturing surface 6, the temperature sensors 3 are preferably arranged directly at the manufacturing surface 6. When referring to a portion 5 of the bulk of the base 1, that respective portion 5 is then expediently arranged below the manufacturing surface 6. Thus, according to the present invention, it is as well achieved that a temperature distribution over or along the thickness B of the base 1 is monitored and/or supervised with the apparatus 10.

The temperature sensors 3 are preferably configured such that a temperature of each of the portions 5 of the base 1 can be measured individually, independently or separately by the temperature sensors 3.

The temperature sensors 3 (as well as the portions 5) are shown homogeneously distributed over the base and equally spaced from each other.

Apart from the indications in the Figures, the temperature sensors 3 may be distributed inhomogeneously, e.g. such that a greater density of temperature sensors is present in a central region of the base 1. This may particularly be advantageous for components (cf. reference numeral 7 in Figure 3), in the manufacture of which the temperature of central features has to be supervised with a greater accuracy.

Preferably, the temperature sensors 3 constitute or comprise thermocouples. Accordingly, the temperature sensors 3 may each comprise a temperature probe which may be denoted by the term "temperature sensor".

In an alternative embodiment, the temperature sensors 3 constitute or comprise pyrometers or pyrometric temperature sensors. Additionally or alternatively, the temperature sensors 3 may be or comprise photometers or any other temperature monitoring or measurement instrumentation.

The apparatus 10 further comprises a plurality of heating elements 4. The heating elements 4 may be arranged within the material of the base 1. The heating elements 4 may be arranged according to the temperature sensors 3 such that each portion 5 can expediently be warmed or heated by one of the heating elements 4 in an operation of the apparatus 10 and/or a facility (cf. numeral 100 in Figure 3). A body of the apparatus 10 may e.g. be formed by the base 1 according to the described embodiment. Further, the heating elements 4 are expediently arranged below the temperature sensors 3 in order to allow for a reliable temperature measurement.

The heating elements 4 are provided for the heating and/or temperature regulation of the different of portions 5. Alternatively, it may be contemplated that a plurality of heating elements 4 is provided for the heating or temperature control, such as a feedback control, of each of the portions 5. Preferably, the heating elements 4 may be or comprise elements for inductive or resistive heating such as wire coils. Alternatively, the heating elements 4 may function by any different means known to a skilled person.

The temperature sensors 3 and/or the heating elements 4 may be provisioned according to the present invention at any perceivable geometry over the base.

The apparatus 10 may further comprise a carrier 2. Preferably, the carrier 2 comprises an array of the heating elements 4 analogous to the upper part of Figure 3, wherein the base retains the heating elements 4.

For the sake of simplicity, the carrier 2 is indicated separate from the base 1 in Figure 2. In an operation of the apparatus 10 and/or the facility, the carrier is preferably arranged directly below the base 1 in order to carry the base 1. When the carrier 2 comprises the described heating elements, the heating elements in the base can be dispensed with.

The apparatus 10 further comprises a control unit 13. The control unit 13 is expediently (electrically) connected to the heating elements 4 and to the temperature sensors 3 in order to respectively control or regulate the temperature of the portions 5,preferably in a closed-loop manner. Solely for the sake of simplicity, Figure 2 shows only two connections from control unit 13 to the heating elements 4 and to the temperature sensors 3, respectively. The temperature sensors 3 are preferably connected through the base 1, such that the connections are not arranged directly at the manufacturing surface 6.

The control unit 13 is further configured to control the temperature of each of the portions 5 individually or separately to a predetermined value, respectively. To this effect, the control unit 13 may drive or actuates the heating elements 4 in such a way that the temperature of each of the portions 5 can be controlled independently or individually. Thereby, it may be possible - according to a user's needs and/or according to the geometry of the heat input during the manufacture of the component 7 - to control the temperature of each of the portions 5 to a different predetermined value, for example. The control unit 13 may be configured to allow for a real-time monitoring of the temperatures of the plurality of portions 5.

The described embodiments pose a significant advantage over the apparatus 10 as described in Figure 1. Particularly, the present invention enables to monitor, control, supervise and/or adjust the temperature of almost any number of different sub regions or portions of the base 1 to a different temperature or according set value. Thus, temperature gradients arising during the manufacture of the corresponding components can be limited to a minimum and to values at which almost no or only negligible thermal distortions, e.g. between the base 1 and the component 7 evolve. This, in turn, leads to a significantly improved junction between the base and the component and to significantly improved mechanical or structural properties of the component 7 which is to be manufactured. At the same time, a complicated postmanufacture may be dispensed with.

Figure 3 shows a facility 100. The facility 100 is preferably a facility or device for additively manufacturing of a component 7 by means of a powder bed manufacturing process, such as selective laser melting. Alternatively, the manufacturing process may be or comprise selective laser sintering and/or electron beam melting.

The component 7 is, preferably directly, manufactured onto the base 1 as described above. Only for simplicity reasons, the carrier is not shown in Figure 3.

The component 7 may be any three-dimensional component or article according to a predetermined geometry. According to the described manufacturing techniques, the component is or can preferably be manufactured layer-wise. The component 7 may be a turbine component such as a component manufactured from nickel-based superalloys to withstand high temperature loads in a gas turbine. In Figure 3, the component 7 is preferably only partly manufactured, i.e. depicted during the manufacturing process.

The facility 100 further comprises the control unit 13 as described above.

The facility 100 further comprises a supply 20 and a discharge 21 for the supply and discharge of a powder 12, respectively. The powder represents a preferable base material for the component 7. For the manufacture, the powder 12 has to be distributed on the manufacturing surface 6 and/or a surface of the component (not explicitly indicated) and subsequently solidified (see below).

The facility 100 further comprises a scraper 8. By means of the scraper 8, the powder 12 may be disposed layer-wise e.g. over the manufacturing surface 6. As shown in Figure 3, the scraper 8 may be moved from the supply 20 in a direction A, e.g. a deposition direction, towards the discharge 21 for every layer of material which has to be additively build up.

Said solidification may expediently be performed by means of a scanning or solidifying unit 9. The solidifying unit 9 may be a laser unit and/or any unit by means of which the powder 12 may be solidified. Preferably, the solidifying unit 9 is configured to provide an energy beam for exposing, melting and thus solidifying the powder 12 according to the components geometry.

The facility 100 further comprises containers 11. The containers 11 retain the powder 12 in the supply 20, the discharge 21 and/or on the manufacturing surface 6.

Is known from conventional facilities for additive manufacturing that the base can be lowered layer-wise during the manufacture according to the progress of the buildup.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Apparatus (10) for a facility (100) for additively manufacturing a component (7) comprising:
- a base (1) forming a manufacturing surface (6), wherein the base (1) comprises a plurality of portions (5), and
- a plurality of temperature sensors (3) being arranged in or below the manufacturing surface (6), wherein at least one temperature sensor (3) is further arranged in each portion (5) and wherein the temperature sensors (3) are configured such that a temperature of each of the portions (5) can be measured individually by the temperature sensors (3).

2. Apparatus (10) according to claim 1, further comprising a plurality of heating elements (4), wherein the heating elements (4) are arranged and configured such that the portions (5) of the base (1) can be heated individually by the heating elements (4).

3. Apparatus (10) according to claim 2, comprising a control unit (13) being connected to the heating elements (4) and to the temperature sensors (3), wherein the control unit (13) is configured to individually control the temperature of the portions (5) to a predetermined value, respectively.

4. Apparatus (10) according to one of the previous claims, wherein the portions (5) are lateral portions of the base (1).

5. Apparatus (10) according to one of the previous claims, wherein at least some of the temperature sensors (3) are arranged at the manufacturing surface (6) for measuring a temperature at the manufacturing surface (6).

6. Apparatus (10) according to one of the previous claims, wherein at least some of the temperature sensors (3) are arranged below the manufacturing surface (6) for measuring a temperature along a thickness of the base (1).

7. Apparatus (10) according to one of the previous claims, further comprising a carrier (2) which is arranged below the base (1), wherein the heating elements (4) are arranged in the carrier (2).

8. Apparatus (10) according to claims 1 to 6, wherein the heating elements (4) are arranged in the base (1).

9. Apparatus (10) according to one of the previous claims, wherein the heating elements (4) are arranged equally spaced with respect to each other and/or the temperature sensors (3) are arranged equally spaced with respect to each other.

10. Apparatus (10) according to one of claims 1 to 8, wherein the heating elements (4) are at least partly arranged inhomogeneously and the temperature sensors (3) are at least partly arranged inhomogeneously.

11. Apparatus (10) according to one of the previous claims, wherein the temperature sensors (3) comprise thermocouples.

12. Facility (100) for additively manufacturing of the component (7) comprising the apparatus (10) according to one of the previous claims further comprising a scraper (8) for depositing a powder (12) as a base material for the component (7) and a solidifying unit (9) for selectively solidifying the powder (12), e.g. with an energy beam, in order to manufacture the component (7).

13. Method of additively manufacturing a component, wherein the facility (100) according to claim 12 and/or the apparatus (10) according to one of claims 1 to 11 is used, wherein the component (7) is manufactured by a powder bed manufacturing process, such as selective laser melting, further comprising:
- controlling the temperature of the portions to a predetermined value, respectively, wherein the temperature of each of the portions (5) of the base is measured individually by the temperature sensors (3) and the portions are heated individually by the heating elements (4).
